# EUROPEAN PATENT SPECIFICATION

(11) **EP 4 384 394 B1**
(45) Date of publication and mention of the grant of the patent: **28.05.2025**
(21) Application number: 22764740.1
(22) Date of filing: 11.08.2022
(51) Int. Cl.: B32B 29/00, D21H 11/02, D21H 11/08, D21H 27/30, D21H 27/38

(54) **ASSYMETRIC PAPERBOARD**
ASYMMETRISCHE PAPPE
CARTON ASYMÉTRIQUE

(30) Priority: 11.08.2021 EP 21190813
(43) Date of publication of application: 19.06.2024
(73) Proprietor: Billerud Aktiebolag (publ), 169 27 Solna (SE)
(72) Inventor: NORDSTRÖM, Fredrik, 652 26 Karlstad (SE); MAGNUSSON, Johan, 718 30 Frövi (SE)
(74) Representative: Kransell & Wennborg KB
(86) International application number: PCT/EP2022/072622
(87) International publication number: WO 2023/017138

(56) References cited:
- EP-A1- 1 936 032
- WO-A1-2019/180303

## Description

### TECHNICAL FIELD

The present disclosure relates to the field of paperboard and in particular to paperboard for use in laminates for packaging of liquid food.

### BACKGROUND

Conventional paperboard for use in liquid food packaging laminates has two outer layers of cellulose fibres (a print layer and a reverse layer) and at least one middle layer of cellulose fibres. The print layer may be provided with a pigment coating for improved printability and/or a more appealing appearance.

WO 2017/003364 discloses an oxygen barrier based on modified cellulose fibres. Various applications of the fibre-based barrier are suggested. One of them is as an oxygen-barrier layer in a multi-layered paperboard product. In this application, the paperboard and the oxygen-barrier layer may be produced independently of each other and then laminated together. No characteristics of the paperboard other than ranges for density and thickness are disclosed.

WO 2011/003565 discloses a laminate for packaging of liquid food. The laminate comprises e.g. paperboard and an oxygen barrier. In the laminate, the aluminium foil that is traditionally used as the oxygen barrier in liquid food packaging is replaced with a paper-based oxygen barrier, which preferably has a grammage of 30-60 g/m². It is further stated that the paperboard of the laminate may be a conventional paperboard of suitable packaging quality that has a grammage of 100-500 g/m² (preferably 200-400 g/m², more preferably 200-300 g/m²).

Further details about a paper on which a barrier for a liquid food packaging laminate can be based are disclosed in WO 2017/089508, which also suggest to downgauge the cellulose-based bulk or core layer of the laminate in comparison to conventional liquid packaging paperboard. In more detail, it is suggested to replace the traditional paperboard with a spacer layer that has lower or no inherent bending stiffness and that is sandwiched between stiffness-enhancing layers. So-called foamed cellulose (a fibrous material) is given as an example of a suitable spacer layer.

### SUMMARY

The present inventors have realized that in a packaging laminate including a paper-based barrier that makes a significant stiffness contribution, the paperboard should not be stripped down to merely a bulky core. Rather, one of the traditional outer layers shall remain in the paperboard structure, whereas the other traditional outer layer is omitted or replaced with a layer having a traditional middle layer composition. However, the present inventors have also realized that the removal or replacement of the traditional outer layer may cause problems in the paperboard production (particularly in the drying section) since it exposes a layer having a traditional middle layer composition. An example of such a problem is dusting. Starch, fines, MFC, CMC or PVOH is therefore added to the exposed "middle layer" surface in order to reduce the occurrence of such problems.

The omission of one of the traditional outer layers may allow for an increase of the grammage of a bulkier middle layer or the addition of another bulky layer. Hence, the paperboard of the present disclosure is not necessarily thinner than the conventional paperboard. Instead, it may actually be thicker since high-density pulp in the omitted outer layer has been replaced with low-density pulp in the middle layer(s).

In its naked state, the design of the paperboard of the present disclosure makes no sense, but in a laminate also including a paper-based barrier, it is optimized and provides for increased bending stiffness and/or reduced fibre content/consumption.

Accordingly, the following itemized listing of embodiments of the present disclosure is provided:
1. A multi-layered paperboard (200, 300) comprising a first cellulose fibre-based layer (201, 301) and a second cellulose fibre-based layer (202, 302), which second layer (202, 302) has an inner surface facing in the direction of the first layer (201, 301) and an outer surface facing in the opposite direction, wherein the density of the second layer (202, 302) is below 550 kg/m³ and lower than the density of the first layer (201, 301), wherein said second layer is formed from a furnish comprising mechanical pulp and wherein an additive (204, 304) selected from the group consisting of starch, fines, MFC, CMC and PVOH is added to the outer surface of the second layer (202, 302) in an amount of 0.3-6.0 g/m², with the proviso that no further cellulose fibre-based layer is provided on the outer surface of the second layer (202, 302).
2. The multi-layered paperboard of item 1, wherein said second layer is formed from a furnish comprising chemitermomechanical pulp (CTMP).
3. The multi-layered paperboard of item 2, wherein the furnish from which said second layer is formed further comprises broke pulp.
4. The multi-layered paperboard of any one of the preceding items, wherein the first layer is formed from a furnish comprising chemical pulp, such as kraft pulp.
5. The multi-layered paperboard of item 4, wherein the furnish from which the first outer layer is formed comprises at least 80% by dry weight kraft pulp.
6. The multi-layered paperboard of item 4 or 5, wherein the furnish from which the first outer layer is formed comprises at least 50% by dry weight hardwood pulp, such as at least 80% by dry weight hardwood pulp.
7. The multi-layered paperboard of any one of the preceding items, wherein the density of the second layer (202, 302) is below 500 kg/m³, such as below 450 kg/m³.
8. The multi-layered paperboard of any one of the preceding items, wherein the density of the first layer (202, 302) is above 580 kg/m³, such as above 620 kg/m³.
9. The multi-layered paperboard of any one of the preceding items, further comprising a third cellulose fibre-based layer (303) arranged between the first (301) and the second (302) layer, wherein the density of the third layer (303) is below 550 kg/m³ and lower than the density of the first layer (301).
10. The multi-layered paperboard of item 9, wherein said third layer is formed from a furnish comprising mechanical pulp, such as chemitermomechanical pulp (CTMP).
11. The multi-layered paperboard of item 10, wherein the furnish from which said third layer is formed further comprises broke pulp.
12. The multi-layered paperboard of any one of items 9-11, wherein the density of the third layer (202, 302) is below 500 kg/m³, such as below 450 kg/m³.
13. The multi-layered paperboard of any one of items 9-12, further comprising a fourth cellulose fibre-based layer arranged between the first and the third layer, wherein the density of the fourth layer is below 550 kg/m³ and lower than the density of the first layer.
14. The multi-layered paperboard (200) of any one of items 1-13, wherein the inner surface of the second layer (202) is in direct contact with the first layer (201).
15. The multi-layered paperboard of any one of the preceding items, wherein the additive is added in an amount of 0.3-5.0 g/m², such as 0.4-3.0 g/m².
16. A method of forming, in a full-scale paperboard machine, a multi-layered paperboard (200, 300) comprising a first cellulose fibre-based layer (201, 301) and a second cellulose fibre-based layer (202, 302), wherein the density of the second layer (202, 302) is below 550 kg/m³ and lower than the density of the first layer (201, 301), said method comprising the steps of:
   - forming a first fibre web from a first furnish;
   - forming a second fibre web from a second furnish comprising mechanical pulp;
   - adding an additive (204, 304) selected from the group consisting of starch, fines, MFC, CMC and PVOH to a side of the second fibre web that is not merged with another fibre web in the full-scale paperboard machine, wherein the additive is added in an amount of 0.3-6.0 g/m².
17. The method of item 16, wherein the second furnish comprises chemitermomechanical pulp (CTMP).
18. The method of item 17, wherein the second furnish further comprises broke pulp.
19. The method of item 16 or 17, wherein the first furnish comprises chemical pulp, such as kraft pulp.
20. The method of item 19, wherein the first furnish comprises at least 80% by dry weight kraft pulp.
21. The method of item 19 or 20, wherein the first furnish comprises at least 50% by dry weight hardwood pulp, such as at least 80% by dry weight hardwood pulp.
22. The method of any one of items 16-21, wherein the density of the second layer (202, 302) is below 500 kg/m³, such as below 450 kg/m³.
23. The method of any one of items 16-22, wherein the density of the first layer (201, 301) is above 580 kg/m³, such as above 620 kg/m³.
24. The method of any one of items 16-23, wherein the multi-layered paperboard further comprises a third cellulose fibre-based layer (303) arranged between the first (301) and the second (302) layer and wherein the density of the third layer (303) is below 550 kg/m³ and lower than the density of the first layer (301), said method further comprises the step of forming a third fibre web from a third furnish.
25. The method of item 24, wherein the third furnish comprises mechanical pulp, such as chemitermomechanical pulp (CTMP).
26. The method of item 25, wherein the third furnish further comprises broke pulp.
27. The method of any one of items 24-26, wherein the density of the third layer (202, 302) is below 500 kg/m³, such as below 450 kg/m³.
28. The method of any one of items 24-27, wherein the multi-layered paperboard further comprises a fourth cellulose fibre-based layer arranged between the first (301) and the third (303) layer and wherein the density of the fourth layer is below 550 kg/m³ and lower than the density of the first layer (301), said method further comprises the step of forming a fourth fibre web from a fourth furnish.
29. The method of any one of items 16-28, wherein the inner surface of the second layer (202) is in direct contact with the first layer (201).
30. The method of any one of items 16-29, wherein the additive is added in an amount of 0.3-5.0 g/m², such as 0.4-3.0 g/m².
31. The method of any one of items 16-30, wherein the additive is added by means of a spraying device, such as a spray beam, or a headbox.
32. The method of any one of items 16-31, wherein the jet-wire speed difference in the forming of the layers is +/- 5-30 m/min.

### BRIEF DESCRIPTION OF THE FIGURES

Fig 1 illustrates an example of a wire section of a paper machine that can be used for forming a multi-layered paperboard according to the present disclosure.
Fig 2 shows an embodiment of a multi-layered paperboard according to the present disclosure.
Fig 3 shows another embodiment of a multi-layered paperboard according to the present disclosure.

### DETAILED DESCRIPTION

As a first aspect of the present disclosure, there is provided a multi-layered paperboard comprising a first cellulose fibre-based layer ("first layer") and a second cellulose fibre-based layer ("second layer"). The second layer has an inner surface facing in the direction of the first layer and an outer surface facing in the opposite direction. The density of the second layer is lower than the density of the first layer. The second layer is formed from a furnish comprising mechanical pulp.

In the context of the present disclosure, density is preferably measured according to ISO 534:2011.

To separate an individual layer from the multi-layered paperboard and thereby facilitate measurements thereon, a FORTUNA Bandknife-Splitting Machine (Type AB 320 E/P) can be used. Such a machine that has been customized for paperboard splitting is commercially available and is used by several major companies in the paperboard field.

Alternatively, a surface grinding technique can be used to remove all layers but the layer of interest. Such a surface grinding is one of the services that are commercially available at RISE Bioeconomy (formerly Innventia) in Stockholm, Sweden.

An additive selected from the group consisting of starch, fines, MFC, CMC and PVOH is added to the outer surface of the second layer. No further cellulose fibre-based layer is provided on the outer surface of the second layer.

The grammage of the paperboard of the first aspect is typically in the range of 120-500 g/m². In an embodiment, it is in the range of 120-250 g/m². In another embodiment, it is above 250 g/m², but not higher than 500 g/m².

In the context of the present disclosure, grammage is preferably measured according to ISO 536:2019.

The density of the second layer is below 550 kg/m³, preferably below 500 kg/m³, such as below 450 kg/m³. In contrast, the density of the first layer is typically above 580 kg/m³, such as above 620 kg/m³.

In an alternative of complimentary embodiment, the second layer is formed from a second furnish comprising a higher relative amount of mechanical pulp (preferably CTMP) than a first furnish from which the first layer is formed. As an example, the second furnish may comprise at least 30% by dry weight of mechanical pulp (preferably CTMP), whereas the first furnish comprises less than 10%, such as 0%, by dry weight of mechanical pulp.

Independent of the composition of the first layer, the furnish from which the second layer is formed (the "second furnish") preferably comprises at least 20% mechanical pulp (preferably CTMP), such as at least 30% mechanical pulp (preferably CTMP), such as at least 40% mechanical pulp (preferably CTMP). Generally, the density decreases with a higher proportion of CTMP.

In a preferred embodiment, the second furnish broke pulp, such as at least 20% by dry weight broke pulp, such as at least 30% by dry weight broke pulp, such as at least 40% by dry weight broke pulp.

Independent of the composition of the second layer, the furnish from which the first layer is formed (the "first furnish") preferably comprises chemical pulp, such as kraft pulp. In one embodiment, the first furnish comprises at least 50% by dry weight kraft pulp, such as at least 80% by dry weight kraft pulp.

In one embodiment, the first furnish comprises at least 50% by dry weight hardwood pulp, such as at least 80% by dry weight hardwood pulp. In another embodiment, first furnish comprises at least 50% by dry weight softwood pulp, such as at least 80% by dry weight softwood pulp.

The paperboard of the first aspect may further comprise a third cellulose fibre-based layer ("third layer") arranged between the first and the second layer. The density of the third layer is lower than the density of the first layer. Preferably, the density of the third layer is below 550 kg/m³, such as below 500 kg/m³, such as below 450 kg/m³. A typical lower limit may be 300 kg/m³.

The third layer is preferably formed from a furnish ("third furnish") comprising mechanical pulp, such as chemitermomechanical pulp (CTMP).

The third furnish may comprise at least 20% by dry weight mechanical pulp (preferably CTMP), such as at least 30% by dry weight mechanical pulp (preferably CTMP), such as at least 40% by dry weight mechanical pulp (preferably CTMP).

In one embodiment, the third furnish comprises broke pulp, such as at least 20% by dry weight broke pulp, such as at least 30% by dry weight broke pulp, such as at least 40% by dry weight broke pulp.

In an embodiment, the paperboard of the first aspect also comprises a fourth cellulose fibre-based layer arranged between the first and the third layer. The density of the fourth layer is lower than the density of the first layer. Preferably, the density of the fourth layer is below 550 kg/m³, such as below 500 kg/m³, such as below 450 kg/m³. A typical lower limit may be 300 kg/m³.

In an embodiment, the inner surface of the second layer is in direct contact with the first layer, which means that neither the third nor the fourth layer is included.

In an embodiment, the third layer is in direct contact with the first and the second layer, which means that the fourth layer is not included.

As explained above, an additive selected from the group consisting of starch, fines, MFC, CMC and PVOH is added to the outer surface of the second layer.

Preferably, the additive is selected from the group consisting of starch, fines, MFC and PVOH.

"Fines" refers to a collection of fibres in which in length-weighted proportion of fibres having a length below 0.2 mm is above 50%. Such a proportion may be measured according to TAPPI T271, preferably using the equipment kajaaniFS300.

The term "MFC" is known to the skilled person. In the context of the present disclosure, MFC covers highly refined pulp produced according to WO 2020/188112 or EP3341523.

In an embodiment, the additive is starch or PVOH.

The amount of the additive is relatively small, 0.3-6.0 g/m², such as 0.3-5.0 g/m², such as 0.4-3.0 g/m². When the additive is fines or MFC, the amount is preferably 1.0-6.0 g/m². When the additive is starch or PVOH, the amount is preferably 0.3-3.0 g/m². Means for applying the additive are discussed below.

As a second aspect of the present disclosure, there is provided a method of forming, in a full-scale paperboard machine, a multi-layered paperboard comprising a first cellulose fibre-based layer ("first layer") and a second cellulose fibre-based layer ("second layer").

A full-scale paperboard machine comprises a forming section, a pressing section and a drying section. The full-scale paperboard machine may further comprise a coating section arranged downstream the drying section. In one embodiment, the full-scale paperboard machine comprises at least on calender arranged downstream the drying section or in a downstream region of the drying section. When the coating section is included, the calender is typically arranged upstream thereof. A full-scale paperboard machine typically produces at least 50,000 tonnes of paperboard per year.

The method comprises the steps of:
- forming a first fibre web from a first furnish;
- forming a second fibre web from a second furnish comprising mechanical pulp;
- adding an additive selected from the group consisting of starch, fines, MFC, CMC and PVOH to a side of the second fibre web that is not merged with another fibre web in the full-scale paperboard machine.

As understood by the skilled person, the first web ultimately becomes the first layer and the second web ultimately becomes the second layer.

In the second aspect, the density of the second layer is lower than the density of the first layer. The density of the second layer is below 550 kg/m³, such as below 500 kg/m³, such as below 450 kg/m³. In contrast, the density of the first layer is preferably above 580 kg/m³, such as above 620 kg/m³.

The second furnish preferably comprises a higher relative amount of mechanical pulp (preferably CTMP) than the first furnish. As an example, the second furnish may comprise at least 30% by dry weight of mechanical pulp (preferably CTMP), whereas the first furnish comprises less than 10%, such as 0%, by dry weight of mechanical pulp.

In an embodiment of the second aspect, the multi-layered paperboard further comprises a third cellulose fibre-based layer ("third layer") arranged between the first and the second layer and the method further comprises the step of forming a third fibre web from a third furnish. As understood by the skilled person, the third fibre web ultimately becomes the third layer.

The density of the third layer is preferably lower than the density of the first layer. In one embodiment, the density of the third layer is below 550 kg/m³, such as below 500 kg/m³, such as below 450 kg/m³.

The third furnish preferably comprises a higher relative amount of mechanical pulp (preferably CTMP) than the first furnish. As an example, the third furnish may comprise at least 30% by dry weight of mechanical pulp (preferably CTMP), whereas the first furnish comprises less than 10%, such as 0%, by dry weight of mechanical pulp.

In an embodiment of the second aspect, the multi-layered paperboard further comprises a fourth cellulose fibre-based layer ("fourth layer") arranged between the first and the third layer and the method further comprises the step of forming a fourth fibre web from a fourth furnish. As understood by the skilled person, the fourth fibre web ultimately becomes the fourth layer.

The density of the fourth layer is preferably lower than the density of the first layer. In one embodiment, the density of the third layer is below 550 kg/m³, such as below 500 kg/m³, such as below 450 kg/m³.

The fourth furnish preferably comprises a higher relative amount of mechanical pulp (preferably CTMP) than the first furnish. As an example, the fourth furnish may comprise at least 30% by dry weight of mechanical pulp (preferably CTMP), whereas the first furnish comprises less than 10%, such as 0%, by dry weight of mechanical pulp.

The additive is added in an amount of 0.3-6.0 g/m², such as 0.3-5.0 g/m², such as 0.4-3.0 g/m². When the additive is fines or MFC, the amount is preferably 1.0-6.0 g/m². When the additive is starch or PVOH, the amount is preferably 0.3-3.0 g/m².

In an embodiment, the additive is added to the second fibre web upstream the pressing section of the paperboard machine, e.g. by spraying or by using a headbox, such as a "fines headbox" or a "plybond headbox" (i.e. a headbox traditionally used to apply glue pulp between webs in the forming section of multi-layered paperboard production). In this embodiment, the dry solids content of the second fibre web is typically the range of 7%-20%, such as 8%-20%, such as 10%-20%, when the additive is added. This embodiment is particularly advantageous when the additive is fines or MFC.

In another embodiment, the additive is added in the pressing section or between the pressing section and the drying section, e.g. by spraying or by using a size press. In this embodiment, the dry solids content of the second fibre web is typically the range of 30-55%, such as 35%-50%, when the additive is added. This embodiment is particularly applicable when the additive is starch or PVOH.

It is often beneficial to orient the fibres of the paperboard layers in the machine direction (MD) to reduce the cracking tendency of the printing layer in packaging applications. However, such MD orientation may increase the cracking tendency of the reverse layer. In case of the paperboard of the present disclosure, any cracking of the second layer is however less of a concern since this layer is intended to be covered by a barrier paper.

One way of orienting the fibres in the MD is to have a difference between the jet speed and the wire speed. In one embodiment of the second aspect, the jet-wire speed difference when forming the layers is +/- 5-30 m/min. For the avoidance of doubt, this means that the speed of the wire is 5-30 m/min faster or 5-30 m/min slower than the speed of the jet from the headbox.

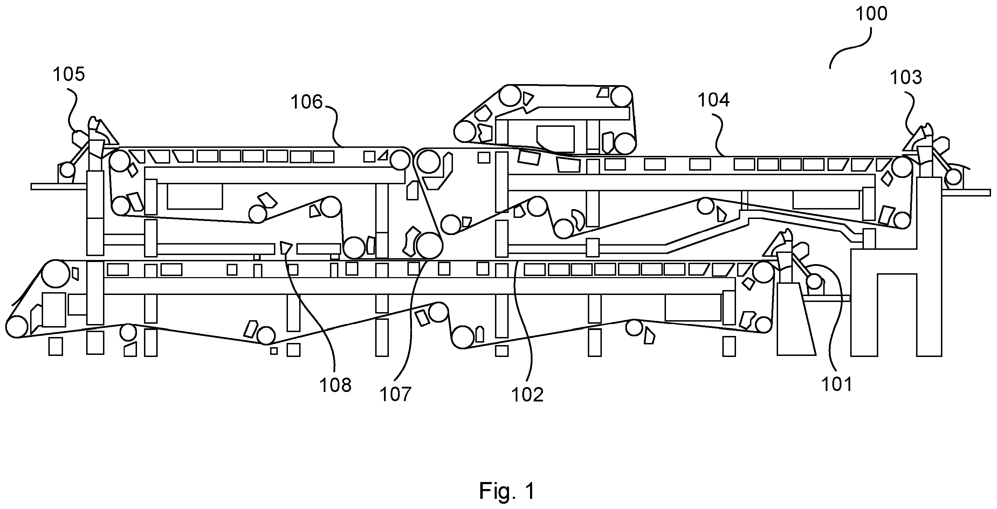

To improve the adhesion between the layers of the paperboard, in particular when using a multi wire forming section as in Figure 1, starch may be applied between the layers in the forming section before they are merged.

What is described above in connection to the first aspect applies to the second aspect *mutatis mutandis.*

### EXAMPLES

### Example 1

Figure 1 shows an example of a wire section 100 of a paper machine that can be used for forming a multi-layered paperboard according to the present disclosure.

The wire section 100 was originally designed to produce a conventional paperboard having three fibre-based layers, namely:
a print layer derived from a first web, which in turn is formed from a print layer furnish based on bleached kraft pulp using a first headbox 101 and a first wire 102;
a bulky middle layer derived from a second web, which in turn is formed from a CTMP-containing middle layer furnish using a second headbox 103 and a second wire 104; and
a reverse layer derived from a third web, which in turn is formed from a reverse layer furnish based on unbleached kraft pulp using a third headbox 105 and a third wire 106.

In the production of such a conventional paperboard, the third web is the uppermost web after it has been combined with the first and the second web in the wire section 100. The point on the first wire 102 in which the first web is intended to be merged with the second and the third web is herein referred to as the merging point 107.

However, the wire section 100 has been adapted to the multi-layered paperboard of the present disclosure by arranging a device 108 for applying starch, fines, MFC, CMC or PVOH above the first wire 102 downstream the merging point 107.

Further, the production is modified by:
a) omitting the forming of the third web; or
b) using a CTMP-containing middle layer furnish to form the third web (using the third headbox 105 and the third wire 106).

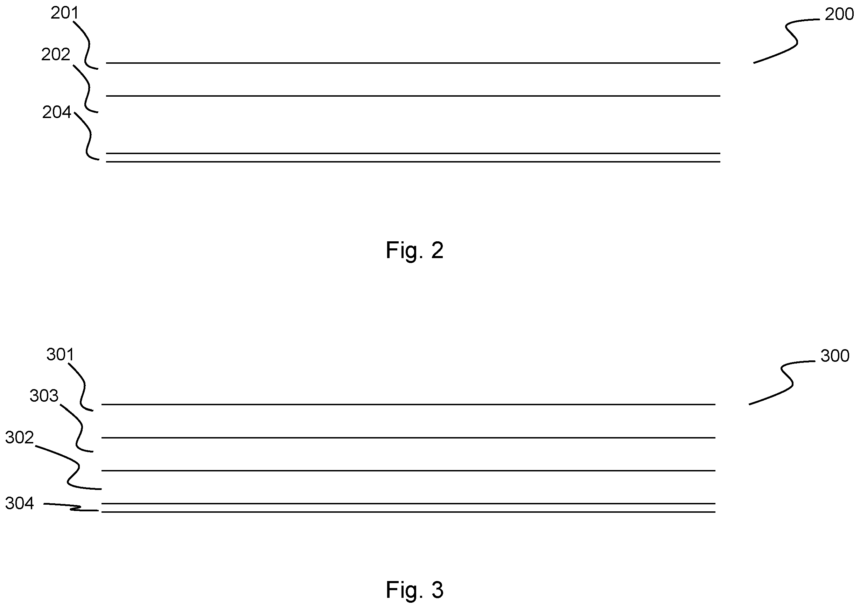

In case a), the resulting multi-layered paperboard 200 contains: a print layer 201; a bulky layer 202; and MFC, fines, CMC, starch or PVOH 204. One side of the print layer 201 is intended for printing and may be covered by a pigment coating (not shown). The other side of the print layer 201 is merged with one side of the bulky layer 202. The MFC, starch or PVOH 204 has been added the other side of the bulky layer 202 (see figure 2). In case a), the grammage of the bulky layer 202 is preferably increased compared to the grammage of the grammage of the conventional paperboard.

In case b), the resulting multi-layered paperboard 300 contains: a print layer 301; a first bulky layer 302; a second bulky layer 303; and MFC, fines, CMC, starch or PVOH 304. One side of the print layer 301 is intended for printing and may be covered by a pigment coating (not shown). The other side of the print layer 301 is merged with one side of the second bulky layer 303. The other side of the second bulky layer 303 is merged with one side of the first bulky layer 302. The MFC, fines, CMC, starch or PVOH 304 has been added to the other side of the first bulky layer 302 (see figure 3).

Case b) may be more preferred since it utilizes the dewatering capacity of the third wire.

In one embodiment, the same CTMP-containing furnish is used for the first bulky layer 302 and the second bulky layer 303. In another embodiment, different furnishes are used for the layers 302, 303.

A typical middle layer furnish comprises broke pulp and chemical pulp in addition to CTMP.

### Example 2

The effects of an embodiment of the paperboard according to figure 2 were calculated. In these calculations, the density and tensile stiffness values were set according to table 1. Any impact of the MFC/fines/CMC/starch/PVOH added to the reverse side of the middle layer was disregarded.

**Table 1**

| | Density (kg/m³) | Tensile stiffness index (kNm/g) |
|---|---|---|
| Print layer | 646 | 5.8 |
| Middle layer | 390 | 4.0 |
| Reverse layer | 665 | 5.9 |

A "traditional" paperboard design having a 65 g/m² print layer, a 130 g/m² middle layer and 45 g/m² reverse layer was used as a reference.

In the inventive paperboard, the reverse layer was omitted and the grammage of the middle layer was increased by 36 g/m².

In addition to paperboard, the structures for which the calculations were made contained a barrier paper provided on the reverse side. Any impact of the adhesive used for attaching the barrier paper to the reverse side of the paperboard has been disregarded in the calculations. The density and tensile stiffness index of this barrier paper was set to 962 kg/m³ and 7.2 kNm/g, respectively.

In example 2, it is assumed that the grammage of the print layer of the "traditional" paperboard is optimized to 65 g/m² (based on i.a. printing properties).

In the inventive paperboard (grammage = 231 g/m²), the grammage is reduced by 9 g/m² when compared to the reference paperboard (grammage = 240 g/m²). This 3.8% reduction of may appear small, but in a full-scale machine producing tens or hundreds of thousands of tonnes of paperboard each year, such a reduction has a significant effect on the economics and environmental impact of the paperboard production.

The results of the calculations are presented in table 2 below.

**Table 2**

| | Ref | Inv |
|---|---|---|
| Print layer grammage (g/m²) | 65 | 65 |
| Middle layer grammage (g/m²) | 130 | 166 |
| Reverse layer grammage (g/m²) | 45 | 0 |
| Paperboard grammage (g/m²) | 240 | 231 |
| Barrier paper grammage (g/m²) | 50 | 50 |
| Total grammage (g/m²) | 290 | 281 |
| Bending resistance (mN) | 677 | 681 |

Notably, the inventive structure has a slightly higher bending resistance than the reference structure despite the significantly lower grammage of the inventive paperboard.

### Example 3

The effects of another embodiment of the paperboard according to figure 2 were calculated. In these calculations, the density and tensile stiffness values were set according to table 1 above. Again, any impact of the MFC/fines/CMC/starch/PVOH added to the reverse side of the middle layer was disregarded.

A "traditional" paperboard design having a 60 g/m² print layer, a 130 g/m² middle layer and 45 g/m² reverse layer was used as a reference.

In the inventive paperboard, the reverse layer was omitted and the grammage of the middle layer was increased by 40 g/m².

In addition to paperboard, the structures for which the calculations were made contained a barrier paper provided on the reverse side. Any impact of the adhesive used for attaching the barrier paper to the reverse side of the paperboard has been disregarded in the calculations. The density and tensile stiffness index of this barrier paper was set to 962 kg/m³ and 7.2 kNm/g, respectively.

In example 3, it is assumed that the grammage of the print layer of the "traditional" paperboard is optimized to 60 g/m² (based on i.a. printing properties).

In the inventive paperboard (grammage = 230 g/m²), the grammage is reduced by 5 g/m² when compared to the reference paperboard (grammage = 235 g/m²). This 2.2% reduction of may appear small, but in a full-scale machine producing tens or hundreds of thousands of tonnes of paperboard each year, such a reduction has a significant effect on the economics and environmental impact of the paperboard production.

The results of the calculations are presented in table 2 below.

**Table 2**

| | Ref | Inv |
|---|---|---|
| Print layer grammage (g/m²) | 60 | 60 |
| Middle layer grammage (g/m²) | 130 | 170 |
| Reverse layer grammage (g/m²) | 45 | 0 |
| Paperboard grammage (g/m²) | 235 | 230 |
| Barrier paper grammage (g/m²) | 50 | 50 |
| Total grammage (g/m²) | 285 | 280 |
| Bending resistance (mN) | 645 | 681 |

Notably, the inventive structure has a significantly higher bending resistance than the reference structure despite that the grammage of the inventive paperboard is lower.

### Example 4

The effects of yet another embodiment of the paperboard according to figure 2 was calculated. In these calculations, the density and tensile stiffness values were set according to table 1 above. Again, any impact of the MFC/fines/CMC/starch/PVOH added to the reverse side of the middle layer was disregarded.

A "traditional" paperboard design having a 60 g/m² print layer, a 62 g/m² middle layer and 45 g/m² reverse layer was used as a reference.

In the inventive paperboard, the reverse layer was omitted and the grammage of the middle layer was increased by 31 g/m².

In addition to paperboard, the structures for which the calculations were made contained a barrier paper provided on the reverse side. Any impact of the adhesive used for attaching the barrier paper to the reverse side of the paperboard has been disregarded in the calculations. The density and tensile stiffness index of this barrier paper was set to 962 kg/m³ and 7.2 kNm/g, respectively.

In example 4, it is assumed that the grammage of the print layer of the "traditional" paperboard is optimized to 60 g/m² (based on i.a. printing properties).

In the inventive paperboard (grammage = 153 g/m²), the grammage is reduced by 14 g/m² when compared to the reference paperboard (grammage = 167 g/m²). This 8.4% reduction has a great effect on the economics and environmental impact of the paperboard production.

The results of the calculations are presented in table 4 below.

**Table 4**

| | Ref | Inv |
|---|---|---|
| Print layer grammage (g/m²) | 60 | 60 |
| Middle layer grammage (g/m²) | 62 | 93 |
| Reverse layer grammage (g/m²) | 45 | 0 |
| Paperboard grammage (g/m²) | 167 | 153 |
| Barrier paper grammage (g/m²) | 50 | 50 |
| Total grammage (g/m²) | 217 | 203 |
| Bending resistance (mN) | 232 | 232 |

Notably, the inventive structure has the same bending resistance as the reference structure despite the grammage reduction.

## Claims

1. A multi-layered paperboard (200, 300) comprising a first cellulose fibre-based layer (201, 301) and a second cellulose fibre-based layer (202, 302), which second layer (202, 302) has an inner surface facing in the direction of the first layer (201, 301) and an outer surface facing in the opposite direction, wherein the density of the second layer (202, 302) is below 550 kg/m³ and lower than the density of the first layer (201, 301), wherein said second layer is formed from a furnish comprising mechanical pulp and wherein an additive (204, 304) selected from the group consisting of starch, fines, MFC, CMC and PVOH is added to the outer surface of the second layer (202, 302) in an amount of 0.3-6.0 g/m², with the proviso that no further cellulose fibre-based layer is provided on the outer surface of the second layer (202, 302).

2. The multi-layered paperboard of claim 1, wherein said second layer is formed from a furnish comprising chemitermomechanical pulp (CTMP).

3. The multi-layered paperboard of claim 2, wherein the furnish from which said second layer is formed further comprises broke pulp.

4. The multi-layered paperboard of any one of the preceding claims, wherein the density of the second layer (202, 302) is below 500 kg/m³, such as below 450 kg/m³.

5. The multi-layered paperboard of any one of the preceding claims, wherein the density of the first layer (202, 302) is above 580 kg/m³, such as above 620 kg/m³.

6. The multi-layered paperboard of any one of the preceding claims, further comprising a third cellulose fibre-based layer (303) arranged between the first (301) and the second (302) layer, wherein the density of the third layer (303) is below 550 kg/m³ and lower than the density of the first layer (301).

7. The multi-layered paperboard of claim 6, wherein said third layer is formed from a furnish comprising mechanical pulp, such as chemitermomechanical pulp (CTMP).

8. The multi-layered paperboard of claims 6 or 7, wherein the density of the third layer (202, 302) is below 500 kg/m³, such as below 450 kg/m³.

9. The multi-layered paperboard of any one of the preceding claims, wherein the additive is added in an amount of 0.3-5.0 g/m², such as 0.4-3.0 g/m².

10. A method of forming, in a full-scale paperboard machine, a multi-layered paperboard (200, 300) comprising a first cellulose fibre-based layer (201, 301) and a second cellulose fibre-based layer (202, 302), wherein the density of the second layer (202, 302) is below 550 kg/m³ and lower than the density of the first layer (201, 301), said method comprising the steps of:
- forming a first fibre web from a first furnish;
- forming a second fibre web from a second furnish comprising mechanical pulp;
- adding an additive (204, 304) selected from the group consisting of starch, fines, MFC, CMC and PVOH to a side of the second fibre web that is not merged with another fibre web in the full-scale paperboard machine,
wherein the additive is added in an amount of 0.3-6.0 g/m².

11. The method of claim 10, wherein the second furnish comprises chemitermomechanical pulp (CTMP).

12. The method of claims 10 or 11, wherein the multi-layered paperboard further comprises a third cellulose fibre-based layer (303) arranged between the first (301) and the second (302) layer and wherein the density of the third layer (303) is below 550 kg/m³ and lower than the density of the first layer (301), said method further comprises the step of forming a third fibre web from a third furnish.

13. The method of any one of claims 10-12, wherein the additive is added in an amount of 0.3-5.0 g/m², such as 0.4-3.0 g/m².

14. The method of any one of claims 10-13, wherein the additive is added by means of a spraying device, such as a spray beam, or a headbox.

15. The method of any one of items 10-14, wherein the jet-wire speed difference in the forming of the layers is +/- 5-30 m/min.

## Patentansprüche

1. Mehrschichtige Pappe (200, 300), aufweisend eine erste Schicht (201, 301) auf Zellulosefaserbasis und eine zweite Schicht (202, 302) auf Zellulosefaserbasis, wobei die zweite Schicht (202, 302) eine innere Oberfläche aufweist, die in Richtung der ersten Schicht (201, 301) weist, und eine äußere Oberfläche, die in die entgegengesetzte Richtung weist, wobei die Dichte der zweiten Schicht (202, 302) geringer als 550 kg/m³ ist und geringer als die Dichte der ersten Schicht (201, 301) ist, wobei die zweite Schicht aus einem mechanischen Zellstoff aufweisenden Faserstoff gebildet ist und wobei ein Additiv (204, 304), das aus der Gruppe ausgewählt ist, die aus Stärke, Feinstoffen, MFC, CMC und PVOH besteht, auf der äußeren Oberfläche der zweiten Schicht (202, 302) in einer Menge von 0,3 bis 6,0 g/m² hinzugegeben ist, mit der Maßgabe, dass keine weitere Schicht auf Zellulosefaserbasis auf der äußeren Oberfläche der zweiten Schicht (202, 302) vorgesehen ist.

2. Mehrschichtige Pappe nach Anspruch 1, wobei die zweite Schicht aus einem Faserstoff gebildet ist, der chemothermomechanischen Zellstoff (CTMP) aufweist.

3. Mehrschichtige Pappe nach Anspruch 2, wobei der Faserstoff, aus dem die zweite Schicht gebildet ist, ferner Ausschusszellstoff aufweist.

4. Mehrschichtige Pappe nach einem der vorhergehenden Ansprüche, wobei die Dichte der zweiten Schicht (202, 302) geringer als 500 kg/m³, beispielsweise geringer als 450 kg/m³, ist.

5. Mehrschichtige Pappe nach einem der vorhergehenden Ansprüche, wobei die Dichte der ersten Schicht (202, 302) höher als 580 kg/m³, beispielsweise höher als 620 kg/m³, ist.

6. Mehrschichtige Pappe nach einem der vorhergehenden Ansprüche, ferner aufweisend eine dritte Schicht (303) auf Zellulosefaserbasis, die zwischen der ersten (301) und der zweiten (302) Schicht angeordnet ist, wobei die Dichte der dritten Schicht (303) geringer als 550 kg/m³ ist und geringer als die Dichte der ersten Schicht (301) ist.

7. Mehrschichtige Pappe nach Anspruch 6, wobei die dritte Schicht aus einem Faserstoff gebildet ist, der mechanischen Zellstoff, beispielsweise chemothermomechanischen Zellstoff (CTMP), aufweist.

8. Mehrschichtige Pappe nach Anspruch 6 oder 7, wobei die Dichte der dritten Schicht (202, 302) geringer als 500 kg/m³, beispielsweise geringer als 450 kg/m³, ist.

9. Mehrschichtige Pappe nach einem der vorhergehenden Ansprüche, wobei das Additiv in einer Menge von 0,3-5,0 g/m², beispielsweise 0,4-3,0 g/m², hinzugegeben ist.

10. Verfahren zum Bilden einer mehrschichtigen Pappe (200, 300) in einer Industrie-Pappmaschine, aufweisend eine erste Schicht auf Zellulosefaserbasis (201, 301) und eine zweite Schicht auf Zellulosefaserbasis (202, 302), wobei die Dichte der zweiten Schicht (202, 302) geringer als 550 kg/m³ ist und geringer als die Dichte der ersten Schicht (201, 301) ist, wobei das Verfahren die folgenden Schritte aufweist:
- Bilden einer ersten Faserbahn aus einem ersten Faserstoff;
- Bilden einer zweiten Faserbahn aus einem zweiten Faserstoff, der mechanischen Zellstoff aufweist;
- Hinzugeben eines Additivs (204, 304), ausgewählt aus der Gruppe bestehend aus Stärke, Feinstoffen, MFC, CMC und PVOH, auf einer Seite der zweiten Faserbahn, die nicht mit einer anderen Faserbahn zusammengeführt wird, in der Industrie-Pappmaschine,
wobei das Additiv in einer Menge von 0,3-6,0 g/m² hinzugegeben wird.

11. Verfahren nach Anspruch 10, wobei der zweite Faserstoff chemothermomechanischen Zellstoff (CTMP) aufweist.

12. Verfahren nach Anspruch 10 oder 11, wobei die mehrschichtige Pappe ferner eine dritte Schicht (303) auf Zellulosefaserbasis aufweist, die zwischen der ersten (301) und der zweiten (302) Schicht angeordnet ist, und wobei die Dichte der dritten Schicht (303) geringer als 550 kg/m³ ist und geringer als die Dichte der ersten Schicht (301) ist, wobei das Verfahren ferner den Schritt des Bildens einer dritten Faserbahn aus einem dritten Faserstoff aufweist.

13. Verfahren nach einem der Ansprüche 10-12, wobei das Additiv in einer Menge von 0,3-5,0 g/m², beispielsweise 0,4-3,0 g/m², hinzugegeben wird.

14. Verfahren nach einem der Ansprüche 10-13, wobei das Additiv mittels einer Sprühvorrichtung, beispielsweise einem Sprühbalken oder einem Stoffauflaufkasten, hinzugegeben wird.

15. Verfahren nach einem der Ansprüche 10-14, wobei die Geschwindigkeitsdifferenz zwischen Düse und Draht bei der Bildung der Schichten +/- 5-30 m/min beträgt.

## Revendications

1. Carton multicouche (200, 300) comprenant une première couche à base de fibres de cellulose (201, 301) et une deuxième couche à base de fibres de cellulose (202, 302), laquelle deuxième couche (202, 302) a une surface intérieure faisant face à la première couche (201, 301) et une surface extérieure faisant face à la direction opposée, dans lequel la densité de la deuxième couche (202, 302) est inférieure à 550 kg/m³ et inférieure à la densité de la première couche (201, 301), dans lequel ladite deuxième couche est formée à partir d'une composition comprenant de la pâte mécanique et dans lequel un additif (204, 304) choisi dans le groupe constitué par l'amidon, les particules fines, le MFC, le CMC et le PVOH est ajouté à la surface extérieure de la deuxième couche (202, 302) en une quantité comprise entre 0,3 et 6,0 g/m², à condition qu'aucune autre couche à base de fibres de cellulose ne soit fournie sur la surface extérieure de la deuxième couche (202, 302).

2. Carton multicouche selon la revendication 1, dans lequel ladite deuxième couche est formée à partir d'une composition comprenant de la pâte chimico-thermomécanique (CTMP).

3. Carton multicouche selon la revendication 2, dans lequel la composition à partir de laquelle ladite deuxième couche est formée comprend en outre de la pâte de rebut.

4. Carton multicouche selon l'une quelconque des revendications précédentes, dans lequel la densité de la deuxième couche (202, 302) est inférieure à 500 kg/m³, telle qu'inférieure à 450 kg/m³.

5. Carton multicouche selon l'une quelconque des revendications précédentes, dans lequel la densité de la première couche (202, 302) est supérieure à 580 kg/m³, telle que supérieure à 620 kg/m³.

6. Carton multicouche selon l'une quelconque des revendications précédentes, comprenant en outre une troisième couche (303) à base de fibres de cellulose disposée entre la première (301) et la deuxième (302) couche, dans lequel la densité de la troisième couche (303) est inférieure à 550 kg/m³ et inférieure à la densité de la première couche (301).

7. Carton multicouche selon la revendication 6, dans lequel ladite troisième couche est formée à partir d'une composition comprenant de la pâte mécanique, telle que de la pâte chimico-thermomécanique (CTMP).

8. Carton multicouche selon les revendications 6 ou 7, dans lequel la densité de la troisième couche (202, 302) est inférieure à 500 kg/m³, telle qu'inférieure à 450 kg/m³.

9. Carton multicouche selon l'une quelconque des revendications précédentes, dans lequel l'additif est ajouté en une quantité comprise entre 0,3 et 5,0 g/m², telle que comprise entre 0,4 et 3,0 g/m².

10. Procédé de fabrication, dans une machine à carton pleine échelle, d'un carton multicouche (200, 300) comprenant une première couche à base de fibres de cellulose (201, 301) et une deuxième couche à base de fibres de cellulose (202, 302), dans lequel la densité de la deuxième couche (202, 302) est inférieure à 550 kg/m³ et inférieure à la densité de la première couche (201, 301), ledit procédé comprenant les étapes suivantes :
- la formation d'une première nappe de fibres à partir d'une première composition ;
- la formation d'une deuxième nappe de fibres à partir d'une deuxième composition comprenant de la pâte mécanique ;
- l'ajout d'un additif (204, 304) choisi dans le groupe constitué par l'amidon, les particules fines, la MFC, la CMC et le PVOH sur un côté de la deuxième nappe de fibres qui n'est pas fusionnée avec une autre nappe de fibres dans la machine à carton pleine échelle, dans lequel l'additif est ajouté en une quantité comprise entre 0,3 et 6,0 g/m².

11. Procédé selon la revendication 10, dans lequel la deuxième pâte à papier comprend de la pâte chimico-thermomécanique (CTMP).

12. Procédé selon l'une quelconque des revendications 10 ou 11, dans lequel le carton multicouche comprend en outre une troisième couche à base de fibres de cellulose (303) disposée entre la première (301) et la deuxième (302) couche et dans lequel la densité de la troisième couche (303) est inférieure à 550 kg/m³ et inférieure à la densité de la première couche (301), ledit procédé comprend en outre l'étape consistant à former une troisième nappe de fibres à partir d'une troisième composition.

13. Procédé selon l'une quelconque des revendications 10 à 12, dans lequel l'additif est ajouté en une quantité comprise entre 0,3 et 5,0 g/m², telle que comprise entre 0,4 et 3,0 g/m².

14. Procédé selon l'une quelconque des revendications 10 à 13, dans lequel l'additif est ajouté au moyen d'un dispositif de pulvérisation, tel qu'un faisceau de pulvérisation, ou d'une caisse de tête.

15. Procédé selon l'une quelconque des revendications 10 à 14, dans lequel la différence de vitesse du jet de fil dans la formation des couches est de + /- 5 à 30 m/min.
